# EUROPEAN PATENT SPECIFICATION

(11) **EP 3 962 776 B1**
(45) Date of publication and mention of the grant of the patent: **21.02.2024**
(21) Application number: 19886550.3
(22) Date of filing: 06.08.2019
(51) Int. Cl.: B60P 1/28

(54) **DUMPER PANELS CONNECTING EMBODIMENT**
VERBINDUNGSKONSTRUKTION FÜR KIPPLASTERPANEELE
MODE DE RÉALISATION DE CONNEXION DE PANNEAUX DE BENNE BASCULANTE

(30) Priority: 21.11.2018 TR 201817565
(43) Date of publication of application: 09.03.2022
(73) Proprietor: Tirsan Treyler Sanayi Ve Ticaret Anonim Sirketi, 54010 Arifiye/Sakarya (TR); Asas Alüminyum Sanayi ve Ticaret Anonim Sirketi, Istanbul (TR)
(72) Inventor: DINDAR, Seyit, Sakarya (TR); AYAN, Sadik Mutlu, Istanbul (TR); YAVUZ, Safa Bayar, Istanbul (TR); KONAR, Murat, Istanbul (TR)
(74) Representative: Yamankaradeniz, Kemal
(86) International application number: PCT/TR2019/050651
(87) International publication number: WO 2020/106245

(56) References cited:
- CN-U- 207 631 072
- DE-A1- 3 600 783
- DE-U1-202012 102 076
- IT-A1- AN20 110 073
- JP-A- H0 966 767
- JP-A- 2013 103 736
- US-A1- 2007 080 561

## Description

### Technical Field

The invention relates to the upper structure construction of the aluminum box type dumper trucks used for the transportation of the construction materials, excavation and ruin waste and fine granular materials for mining in main road and off-road conditions.

The invention especially relates to construction, which is the combination of the front bollard - the side panel and the rear panel of the aluminum box type dumper trucks, providing an increase in general endurance, increasing the vehicle life under the conditions of use, and preventing customer complaints.

### Background of the Invention

When the competitor dumper products are examined, there is no structure and bearing profile, which makes sure that the combination of front panel sheet and the side panel forms a bearing geometrically. Therefore, cracks and quality problems are encountered after sales in the vehicle front panel and side panel combinations. These cracks shorten the vehicle lifetime, and cause the vehicle to go out of service after a particular usage.

Similarly again, examining the existing products shows that the back bollard profile and the side panel combination do not support each other in bearings geometrically. Therefore, cracks and quality problems are encountered in the vehicle back bollard and side panel combinations after sales after a particular usage is carried out. These cracks shorten the vehicle lifetime, and cause the vehicle to go out of service after a particular usage.

Furthermore, since the panel combinations produced by some competitors do not support each other in bearings geometrically, operational clearances occur after a particular usage resulting from production tolerance between the side panels, and loading. Paint rising and visual impairments occur on the side panel combination points because of these clearances. In order to conceal these visual problems and paint nuisances, the competitor companies resorted to conceal the deficiencies of their vehicles with the make-up method by carrying out logo application and coating applications on the side panels. In this case, the vehicle side panel labor time increases with the use of coating material, and the vehicle costs increase because of the application cost.

The application with number EP3210860 determined as a result of technical investigations, mentions an embodiment, in which the frigorific vehicle panels are attached to one another. As for the embodiment of the invention, it relates to the dumper trucks. In the application with number EP3210860, as indicated in figure-3 and figure-4, when the panels are subjected to pulling in x direction, disintegration and quality problems are likely to happen since the embodiments in the prior art bear the risk of disintegrating in x direction. As for the application of the invention, since the panels support each other in bearings, there is no risk of disintegration and quality problem in the panel even if the panels are pulled in x direction.

US20070080561A1 discloses a trailer wall construction having reduced weight. A trailer wall construction includes a spherical shaped corner at a juncture of three walls. Each of the walls includes at least one panel having spaced apart inner and outer shells.

As a result, due to above-mentioned negativities, and shortcoming of the existing solutions on the subject matter, an improvement was needed in the related technical field.

### The object of the Invention

Unlike the embodiments employed in the prior art, the invention aims to set forth a structure in this field having different technical characteristics, which brings forth a new evolution.

The primary object of the invention is to set forth an embodiment, in which the front bollard-side panel, the side panel-side panel and the side panel-back bollard combinations geometrically support one another in bearings in dumper vessels.

On the object of the invention is to prevent cracking and quality problems occurring on the front panel-side panel combination points.

Another object of the invention is to prevent the cracking, quality problems and paint defects on the side panel-side panel combination points

Another object of the invention is to prevent the cracking, quality problems on the side panel-back panel combination points, and to make sure that this area, which is the most worn area at the back of the vehicle, has a structure more resistant against wear.

In order to carry out above-mentioned purposes, the present invention proposes a method of assembling a dumper vessel of a box type dumper truck which makes sure the front bollard profile, the side panel profile and back bollard profile that constitutes the dumper vessel of the box type dumper truck are engaged so that they complement one another geometrically and combined with the welding method, wherein it includes;
- Making sure that the front bollard profile and the side panel profile are combined;
   ∘ The side panel profile front cove, in which the front bollard profile side panel protrusion is positioned,
   ∘ The front bollard profile side panel cove, in which the side panel profile front protrusion is positioned,
   ∘ The side panel profile front welding bevel, which is welded together with the front bollard profile welding bevel,
- Making sure that the side panel profile is combined with the other side panel profile;
   ∘ The side panel profile back cove, in which the side panel profile front protrusion is positioned,
   ∘ The side panel profile front cove, in which the side panel profile back protrusion is positioned,
   ∘ The side panel profile front welding bevel, which is welded together with the side panel profile back welding bevel,
- Making sure that the side panel profile and the back bollard profile are combined;
   ∘ The back bollard profile front cove, in which the side panel profile back protrusion is positioned,
   ∘ The side panel profile back cove, in which the back bollard profile front protrusion is positioned,
   ∘ The back bollard profile welding bevel, which is welded together with the side panel profile back welding bevel

Structural and characteristic features and all advantages of the invention will be understood more clearly through the images provided below and by references made to these images; and therefore, it is required to make evaluations by considering these images and detailed explanations.

### The Figures that will Help for the Invention to be Understood.

Figure-1: Perspective view of the box type dumper truck of the invention.
Figure-2: Perspective view of the basin of the box type dumper truck of the invention.
Figure-3: Sectional view of the box type dumper truck Front Bollard - Side Panel Profile combination of the invention.

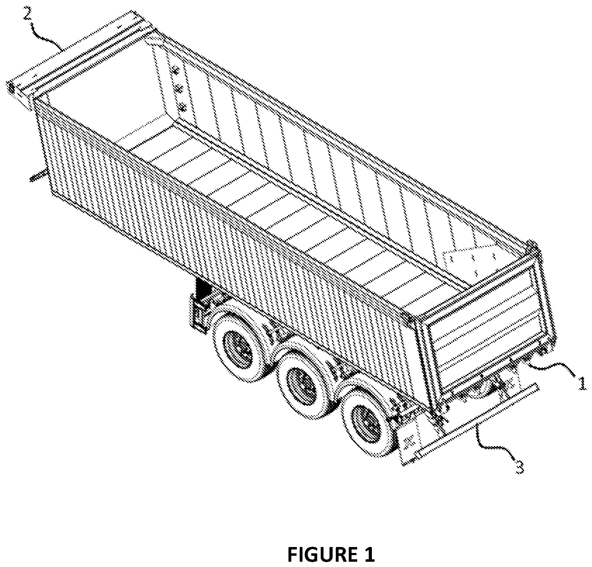

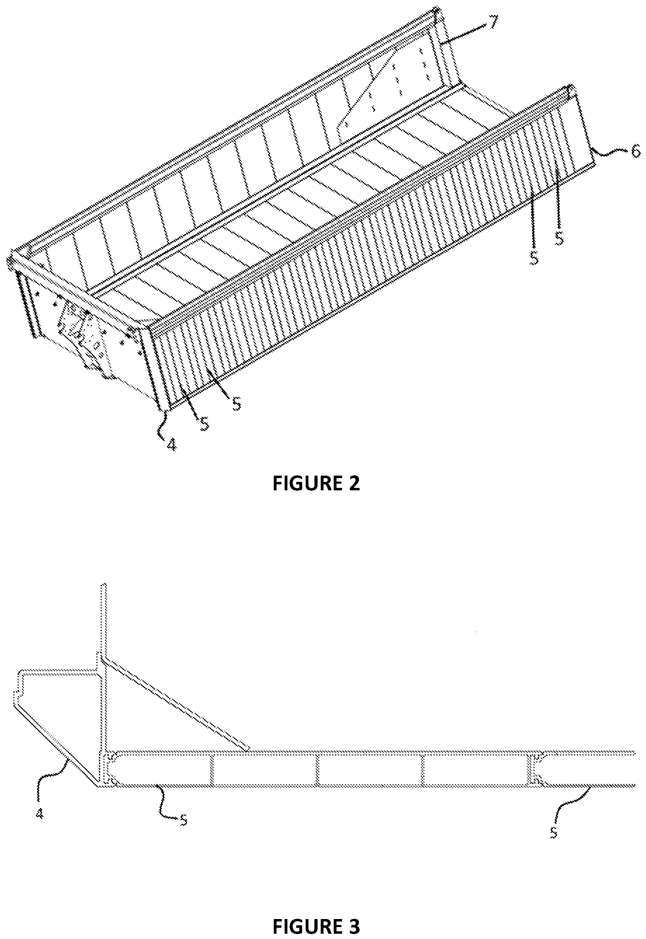

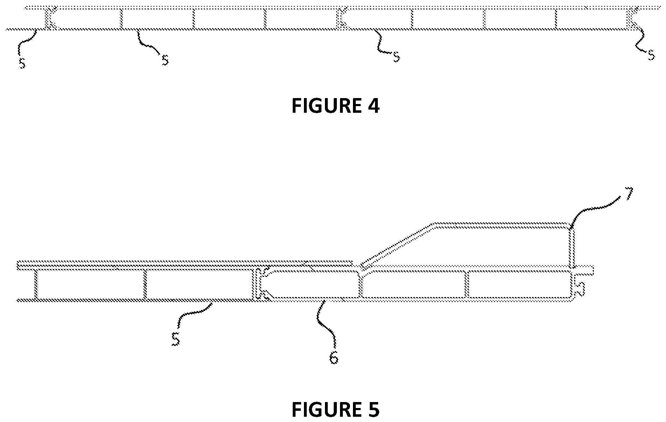

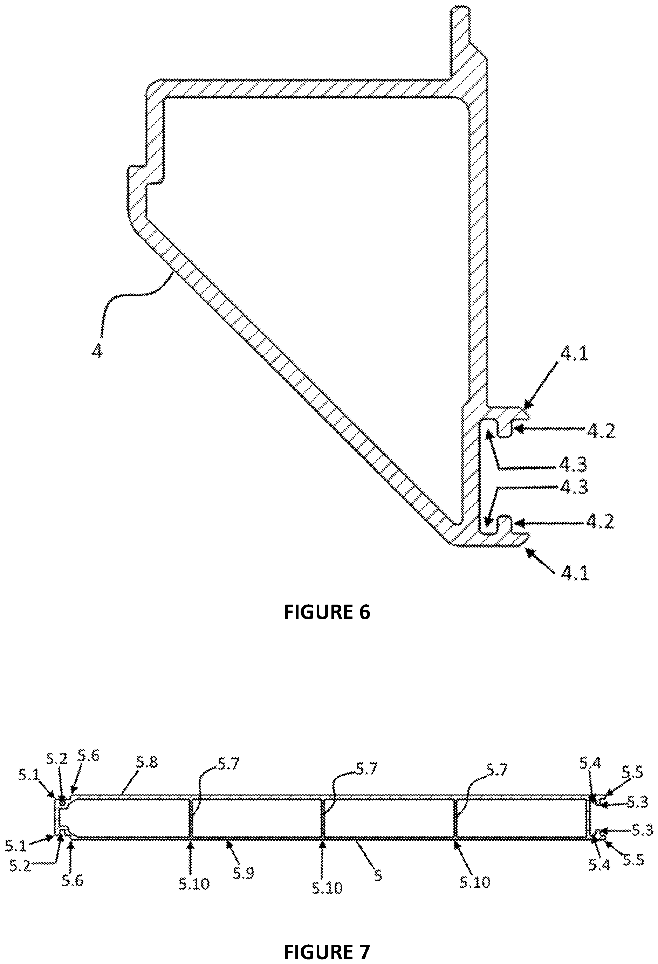

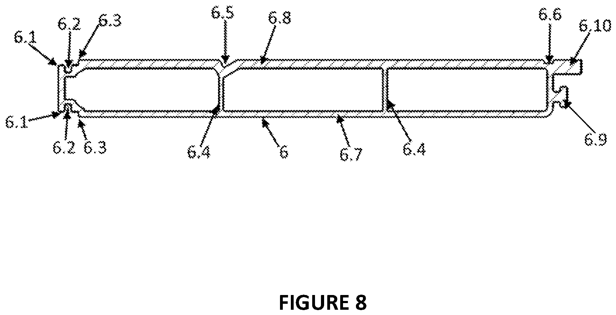

Figure 4: Sectional view of the box type dumper truck Side Panel Profiles combination of the invention.
Figure-5: Sectional view of the box type dumper truck Side Panel Profile - Back Bollard Profile combination of the invention.
Figure-6: Sectional view of the box type dumper truck Front Bollard Profile of the invention.
Figure-7: Sectional view of the box type dumper truck Side Panel Profile of the invention.
Figure-8: Sectional view of the box type dumper truck Back Panel Profile of the invention.

The drawings absolutely need to be scaled, and details not required for understanding the present invention may have been omitted. Besides, elements which are largely identical or at least with largely identical functions are shown with the same number.

### Description of Part References

1. Box type dumper truck
2. Dumper vessel
3. Dumper chassis
4. Front bollard profile
   4.1 Front bollard profile welding bevel
   4.2 Front bollard profile side panel protrusion
   4.3 Front bollard profile side panel cove
5. Side panel profile
   5.1 Side panel profile front protrusion
   5.2 Side panel profile front cove
   5.3 Side panel profile back protrusion
   5.4 Side panel profile back cove
   5.5 Side panel profile back welding bevel
   5.6 Side panel profile front welding bevel
   5.7 Side panel profile center feeder
   5.8 Side panel profile internal feeder
   5.9 Side panel profile external feeder
   5.10 Side panel profile external discharge
6. Back bollard profile
   6.1 Back bollard profile front protrusion
   6.2 Back bollard profile front cove
   6.3 Back bollard profile welding bevel
   6.4 Back bollard profile center feeder
   6.5 Back bollard reinforcement front recess
   6.6 Back bollard reinforcement back recess
   6.7 Back bollard profile external feeder
   6.8 Back bollard profile internal feeder
   6.9 Mounting boss for accessory
   6.10 Cover seating protrusion
7. Back bollard internal reinforcement

### Detailed Description of the Invention

In this detailed explanation, preferred embodiments of the invention are explained only to provide a further understanding of the subject matter of the invention without causing any limiting effect.

The box type dumper truck is a vehicle, which is used to transport fine-grained granular materials, and in the excavation transport. There is a dumper vessel (2), which allows transportation of fine-grained granular materials, and located at the top where the load is stored and transported. The embodiment of the invention is employed in the aluminum box type dumper vessel (2) in the aluminum box type dumper trucks (1). Said box type dumper trucks (1) include a dumper chassis (3), which is one of the main structures where components like moving part, accessory, axle, bumper bearing, rising bumper and bumper pin are installed on the vehicle.

Said dumper vessel (2) contains the front bollard profile (4), the Side panel profile (5), the Back bollard profile (6), and the Back bollard internal reinforcement (7) components. The dumper vessel (2) is produced by combining said components by the welding procedure.

Supporting the front panel sheet and the side panel profiles (5) in bearings, the front bollard profile (4) makes sure that a whole is created geometrically. The side panel profile (5) makes sure that the horizontal forces created by the load within the dumper vessel (2) are borne on the side section. Combining with the interlocking method lengthwise in the dumper vessel (2) side sections, it constitutes the big part of the vehicle basin side panel.

The back bollard profile (6) makes sure that the horizontal forces created by the load within the dumper vessel (2) are borne on the side back section. Moreover, by joining with the side panel profiles (5) in the vehicle back section, where the equipment required for door installation are affixed, creates the vehicle side panel. The back bollard internal reinforcement (7) is used in order to increase the vehicle endurance in the back part of the vehicle basin (6), prevent the vehicle back part from leaning towards the horizontal, and provide for resistance against wear.

The front bollard profile (4) contains the front bollard profile welding bevel (4.1), the front bollard profile side panel protrusion (4.2), and the front bollard profile side panel cove (4.3).

The side panel profile (5) contains the front protrusion (5.1), the side panel profile front cove (5.2), the side panel profile back protrusion (5.3), the side panel profile back cove (5.4), the side panel profile back welding bevel (5.5), the front welding bevel (5.6), the side panel profile center feeder (5.7), the side panel profile internal feeder (5.8), the side panel profile external feeder (5.9), and the side panel profile external discharge (5.10).

The back bollard profile (6) contains the back bollard profile front protrusion (6.1), the back bollard profile front cove (6.2), the back bollard profile welding bevel (6.3), the back bollard profile center feeder (6.4), the back bollard reinforcement front recess (6.5), the back bollard reinforcement front recess (6.6), the back bollard profile external feeder (6.7), the back bollard profile internal feeder (6.8), the accessory mounting boss (6.9), and the door seating protrusion (6.10).

The front bollard profile (4) and the side panel profile (5) are combined by firstly geometrically engaging the front bollard profile side panel protrusion (4.2) and the side panel profile front cove (5.2) with the interlocking method.

The front bollard profile (4) and the side panel profile (5) are combined by secondly geometrically engaging the front bollard profile side panel cove (4.3) and the side panel profile front protrusion (5.1) with the interlocking method.

The front bollard profile (4) and the side panel profile (5) are engaged with welding by combining the geometrical form created by the front bollard profile welding bevel (4.1) and the side panel profile front welding bevel (5.6) to each other.

The geometrical shapes of the front bollard profile side panel protrusion (4.2) and the side panel profile front cove (5.2) are compatible with each other. While the front bollard profile side panel protrusion (4.2) serves as the male element, the side panel profile front cove (5.2) serves as the female element. By this means, the front bollard profile (4) and the side panel profile (5) form a bearing so that they cannot move in x and y directions between themselves. (The front bollard profile (4) and the side panel profile (5) form a bearing from the 1. area.)

The geometrical shapes of the front bollard profile side panel cove (4.3) and the side panel profile front protrusion (5.1) are compatible with each other. While the side panel profile front protrusion (5.1) serves as the male element, the front bollard profile side panel cove (4.3) serves as the female element. By this means, the front bollard profile (4) and the side panel profile (5) form a bearing so that they cannot move in x and y directions between themselves. (The front bollard profile (4) and the side panel profile (5) form a bearing from the 2. area.)

The side panel profile (5) and the other side panel profile (5) are combined by firstly geometrically engaging the side panel profile front protrusion (5.1) and the side panel profile back cove (5.4) with the interlocking method.

The side panel profile (5) and the other side panel profile (5) are combined by secondly geometrically engaging the side panel profile front cove (5.2) and the side panel profile back protrusion (5.3) with the interlocking method.

The side panel profile (5) and the other side panel profile (5) are engaged with welding by combining the geometrical form created by the side panel profile back welding bevel (5.5) and the side panel profile front welding bevel (5.6) to each other.

The geometrical shapes of the side panel profile front protrusion (5.1) and the side panel profile back cove (5.4) are compatible with each other. While the side panel profile front protrusion (5.1) serves as the male element, the side panel profile back cove (5.4) serves as the female element. By this means, the side panel profile (5) and the other side panel profile (5) form a bearing so that they cannot move in x and y directions between themselves (the side panel profiles (5) form a bearing from the 1. area).

The geometrical shapes of the side panel profile back protrusion (5.3) and the side panel profile front cove (5.2) are compatible with each other. While the side panel profile back protrusion (5.3) serves as the male element, the side panel profile front cove (5.2) serves as the female element. By this means, the side panel profile (5) and the other side panel profile (5) form a bearing so that they cannot move in x and y directions between themselves. (The side panel profiles (5) form a bearing from the 2. area ).

The side panel profile (5) and the back bollard profile (6) are combined by firstly geometrically engaging the side panel profile back protrusion (5.3) and the back bollard profile front cove (6.2) with the interlocking method.

The side panel profile (5) and the back bollard profile (6) are combined by secondly geometrically engaging the side panel profile back cove (5.4) and the back bollard profile front protrusion (6.1) with the interlocking method.

The side panel profile (5) and the back bollard profile (6) are engaged with welding by combining the geometrical form created by the side panel profile back welding bevel (5.5) and the back bollard profile welding bevel (6.3) to each other.

The geometrical shapes of the side panel profile back protrusion (5.3) and the back bollard profile front cove (6.2) are compatible with each other. While the side panel profile back protrusion (5.3) serves as the male element, the back bollard profile front cove (6.2) serves as the female element. By this means, the side panel profile (5) and the back bollard profile (6) form a bearing so that they cannot move in x and y directions between themselves. (The side panel profile (5) and the back bollard profile (6) form a bearing from the 1. area.)

The geometrical shapes of the side panel profile back cove (5.4) and the back bollard profile front protrusion (6.1) are compatible with each other. While the back bollard profile front protrusion (6.1) serves as the male element, the side panel profile back cove (5.4) serves as the female element. By this means, the side panel profile (5) and the back bollard profile (6) form a bearing so that they cannot move in x and y directions between themselves. (The side panel profile (5) and the back bollard profile (6) form a bearing from the 2. area.)

The side panel profile center feeder (5.7) is being used as the side panel profile (5) bottom element so it will be at least 3 pcs. It is used in reinforcing the side panel profile (5).

The side panel profile internal feeder (5.8) is the part in contact with the load inside the side panel profile (5). The side panel profile external feeder (5.9) is the exterior of the side panel profile (5). Since there is no contact between the side panel profile external feeder (5.9) and the load, the wall thickness of the side panel profile external feeder (5.9) is shorter than the wall thickness of the side panel profile internal feeder (5.8).

The side panel profile external discharge (5.10) is used as the side panel profile (5) bottom element so it will be at least 3 pcs. It is used for lightening the side panel profile (5). Additionally, it provides visual integrity and geometrical parallelism at the exterior of the vehicle by delivering visuality in a form consistent with the welding bevel discharge created by the following components;
- The front bollard profile side panel protrusion (4.2) and the side panel profile front cove (5.2)
- The side panel profile front protrusion (5.1) and the side panel profile back cove (5.4)
- The side panel profile welding bevel back (5.5) and the back bollard profile welding bevel (6.3)

The back bollard profile (6) and the back bollard internal reinforcement (7) are combined by firstly geometrically engaging the back bollard reinforcement front recess (6.5) and the back bollard profile internal reinforcement (7) with the interlocking method. By this means, the back bollard profile (6) and the back bollard internal reinforcement (7) form a front bearing so that they cannot move in x direction.

The back bollard profile (6) and the back bollard internal reinforcement (7) are combined by secondly geometrically engaging the back bollard reinforcement back recess (6.6) and the back bollard internal reinforcement (7) with the interlocking method. By this means, the back bollard profile (6) and the back bollard internal reinforcement (7) form a back bearing so that they cannot move in x direction.

The back bollard profile internal feeder (6.8) is the part in contact with the load inside the back bollard profile (6). The back bollard profile external feeder (6.7) is the exterior of the back bollard profile (6). Since there is no contact between the back bollard profile external feeder (6.7) and the load, the wall thickness of the back bollard profile external feeder (6.7) is shorter than the wall thickness of the back bollard profile internal feeder (6.8).

The back bollard profile center feeder (6.4) is being used as the back bollard profile (6) bottom element so it will be at least 2 pcs. It is used in reinforcing the back bollard profile (6).

The accessory mounting boss (6.9) is used as the back bollard profile (6) bottom element. The accessory mounting boss (6.9) is used as the male bearing in wedge installation of the rubber, which is installed on the back door. Thanks to its geometric form, it makes sure that the accessory installation can be carried out without using any fasteners such as rivets, bolts, or nuts.

The door seating protrusion (6.10) is used as the back bollard profile (6) bottom element. It is the part, which the basin back door contacts. Therefore, it needs a high strength requirement. Therefore, the door seating protrusion (6.10) wall thickness is shorter than the back bollard profile internal feeder (6.8) wall thickness.

## Claims

1. Method of assembling a dumper vessel (2) of a box type dumper truck (1), which makes sure a front bollard profile (4), side panel profiles (5) and a back bollard profile (6) that constitutes the dumper vessel (2) of the box type dumper truck (1) are engaged so that they complement one another geometrically and combined with a welding method, wherein the method includes:
• Making sure that the front bollard profile (4) and a side panel profile (5) are combined, wherein:
∘ a front bollard profile side panel protrusion (4.2) is positioned in a side panel profile front cove (5.2),
∘ a side panel profile front protrusion (5.1) is positioned in a front bollard profile side panel cove (4.3),
∘ a side panel profile front welding bevel (5.6) is welded together with a front bollard profile welding bevel (4.1);
• Making sure that a side panel profile (5) is combined with another side panel profile (5), wherein:
∘ a side panel profile front protrusion (5.1) is positioned in a side panel profile back cove (5.4),
∘ a side panel profile back protrusion (5.3) is positioned in a side panel profile front cove (5.2),
∘ a side panel profile front welding bevel (5.6) is welded together with a side panel profile back welding bevel (5.5);
• Making sure that a side panel profile (5) and the back bollard profile (6) are combined;
∘ a side panel profile back protrusion (5.3) is positioned in a back bollard profile front cove (6.2),
∘ a back bollard profile front protrusion (6.1) is positioned in a side panel profile back cove (5.4),
∘ a back bollard profile welding bevel (6.3) which is welded together with a side panel profile back welding bevel (5.5).

2. The method according to claim 1, wherein the front bollard profile side panel protrusion (4.2) is in male form, and the side panel profile front cove (5.2) is in female form.

3. The method according to claim 1, wherein the side panel profile front protrusion (5.1) is in male form, and the front bollard profile side panel cove (4.3) is in female form.

4. The method according to claim 1, wherein the side panel profile front protrusion (5.1) is in male form, and the side panel profile back cove (5.4) is in female form.

5. The method according to claim 1, wherein the side panel profile back protrusion (5.3) is in male form, and the side panel profile front cove (5.2) is in female form.

6. The method according to claim 1, wherein the side panel profile back protrusion (5.3) is in male form, and the back bollard profile front cove (6.2) is in female form.

7. The method according to claim 1, wherein the back bollard profile front protrusion (6.1) is in male form, and the side panel profile back cove (5.4) is in female form.

8. The method according to claim 1, wherein:
• The back bollard reinforcement front recess (6.5), which is combined with the back bollard internal reinforcement (7),
• The back bollard reinforcement back recess (6.6), which is combined with the back bollard internal reinforcement (7),
make sure that the back bollard profile (6) and the back bollard internal reinforcement (7) are combined.

9. The method according to claim 1, wherein the side panel profile external discharge (5.10) positioned on the exterior of the side panel profile (5), makes sure that the weight is reduced by emptying a section.

10. The method according to claim 1, wherein the accessory mounting boss (6.9) is used as the male bearing when installing the accessory parts fastened on the back door, and used as the bottom element of the back bollard profile (6).

11. The method according to claim 1, wherein the front bollard profile (4) contains the front bollard profile welding bevel (4.1), the front bollard profile side panel protrusion (4.2), and the front bollard profile side panel cove (4.3).

12. The method according to claim 1, wherein side panel profile (5) contains the front protrusion (5.1), the side panel profile front cove (5.2), the side panel profile back protrusion (5.3), the side panel profile back cove (5.4), the side panel profile back welding bevel (5.5), the front welding bevel (5.6), the side panel profile center feeder (5.7), the side panel profile internal feeder (5.8), the side panel profile external feeder (5.9), and the side panel profile external discharge (5.10).

13. The method according to claim 1, wherein the back bollard profile (6) contains the back bollard profile front protrusion (6.1), the back bollard profile front cove (6.2), the back bollard profile welding bevel (6.3), the back bollard profile center feeder (6.4), the back bollard reinforcement front recess (6.5), the back bollard reinforcement front recess (6.6), the back bollard profile external feeder (6.7), the back bollard profile internal feeder (6.8), the accessory mounting boss (6.9), and the door seating protrusion (6.10).

## Patentansprüche

1. Verfahren zum Zusammenbauen einer Kippmulde (2) eines kastenförmigen Kipplasters (1), das sicherstellt, dass ein vorderes Pollerprofil (4), Seitenpaneelprofile (5) und ein hinteres Pollerprofil (6), die die Kippmulde (2) des kastenförmigen Kipplasters (1) darstellen, so ineinander greifen, dass sie einander geometrisch ergänzen und mit einem Schweißverfahren kombiniert werden, wobei das Verfahren umfasst:
• Sicherstellen, dass das vordere Pollerprofil (4) und ein Seitenpaneelprofil (5) kombiniert werden, wobei:
o ein vorderer Pollerprofil-Seitenpaneelvorsprung (4.2) in einer vorderen Seitenpaneelprofileinbuchtung (5.2) angeordnet ist,
o ein vorderer Seitenpaneelprofilvorsprung (5.1) in einer vordere Pollerprofil-Seitenpaneeleinbuchtung (4.3) angeordnet ist,
o eine vordere Seitenpaneelprofil-Schweißfase (5.6) mit einer vorderen Pollerprofil-Schweißfase (4.1) zusammengeschweißt ist,
• Sicherstellen, dass ein Seitenpaneelprofil (5) mit einem anderen Seitenpaneelprofil (5) kombiniert wird, wobei:
o ein vorderer Seitenpaneelprofilvorsprung (5.1) in einer hinteren Seitenpaneelprofileinbuchtung (5.4) angeordnet ist,
o ein hinterer Seitenpaneelprofilvorsprung (5.3) in einer vorderen Seitenpaneelprofileinbuchtung (5.2) angeordnet ist,
o eine vordere Seitenpaneelprofil-Schweißfase (5.6) mit einer hinteren Seitenpaneelprofil-Schweißfase (5.5) zusammengeschweißt ist,
• Sicherstellen, dass ein Seitenpaneelprofil (5) und das hintere Pollerprofil (6) kombiniert werden,
o ein hinterer Seitenpaneelprofilvorsprung (5.3) in einer vorderen Einbuchtung des hinteren Pollerprofils (6.2) angeordnet ist,
o ein vorderer Vorsprung des hinteren Pollerprofils (6.1) in einer hinteren Seitenpaneelprofileinbuchtung (5.4) angeordnet ist,
o eine hintere Pollerprofil-Schweißfase (6.3), die mit einer hinteren Seitenpaneelprofil-Schweißfase (5.5) zusammengeschweißt ist.

2. Verfahren nach Anspruch 1, wobei der vordere Pollerprofil-Seitenpaneelvorsprung (4.2) eine Steckerform und die vordere Seitenpaneelprofileinbuchtung (5.2) eine Buchsenform aufweist.

3. Verfahren nach Anspruch 1, wobei der vordere Seitenpaneelprofilvorsprung (5.1) eine Steckerform und die vordere Pollerprofil-Seitenpaneeleinbuchtung (4.3) eine Buchsenform aufweist.

4. Verfahren nach Anspruch 1, wobei der vordere Seitenpaneelprofilvorsprung (5.1) eine Steckerform und die hintere Seitenpaneelprofileinbuchtung (5.4) eine Buchsenform aufweist.

5. Verfahren nach Anspruch 1, wobei der hintere Seitenpaneelprofilvorsprung (5.3) eine Steckerform und die vordere Seitenpaneelprofileinbuchtung (5.2) eine Buchsenform aufweist.

6. Verfahren nach Anspruch 1, wobei der hintere Seitenpaneelprofilvorsprung (5.3) eine Steckerform und die vordere Einbuchtung des hinteren Pollerprofils (6.2) eine Buchsenform aufweist.

7. Verfahren nach Anspruch 1, wobei der vordere Vorsprung des hinteren Pollerprofils (6.1) eine Steckerform und die hintere Seitenpaneelprofileinbuchtung (5.4) eine Buchsenform aufweist.

8. Verfahren nach Anspruch 1, wobei:
• die vordere Einbuchtung der hinteren Pollerverstärkung (6.5), die mit der hinteren Pollerinnenverstärkung (7) kombiniert ist,
• die hintere Einbuchtung der hinteren Pollerverstärkung (6.6), die mit der hinteren Pollerinnenverstärkung (7) kombiniert ist,
dafür sorgen, dass das hintere Pollerprofil (6) und die hintere Pollerinnenverstärkung (7) miteinander kombiniert sind.

9. Verfahren nach Anspruch 1, wobei der an der Außenseite des Seitenpaneelprofils (5) angeordnete äußere Seitenpaneelprofilablauf (5.10) dafür sorgt, dass das Gewicht durch Entleerung eines Abschnitts gesenkt wird.

10. Verfahren nach Anspruch 1, wobei der Zubehör-Befestigungsansatz (6.9) als Lagerzapfen beim Anbringen der an der hinteren Klappe befestigten Zubehörteile und als unteres Element des hinteren Pollerprofils (6) verwendet wird.

11. Verfahren nach Anspruch 1, wobei das vordere Pollerprofil (4) die vordere Pollerprofil-Schweißfase (4.1), den vorderen Pollerprofil-Seitenpaneelvorsprung (4.2) und die vordere Pollerprofil-Seitenpaneeleinbuchtung (4.3) enthält.

12. Verfahren nach Anspruch 1, wobei das Seitenpaneelprofil (5) den vorderen Vorsprung (5.1), die vordere Seitenpaneelprofileinbuchtung (5.2), den hinteren Seitenpaneelprofilvorsprung (5.3), die hintere Seitenpaneelprofileinbuchtung (5.4), die hintere Seitenpaneelprofil-Schweißfase (5.5), die vordere Schweißfase (5.6), die mittlere Seitenpaneelprofilzuführung (5.7), die innere Seitenpaneelprofilzuführung (5.8), die äußere Seitenpaneelprofilzuführung (5.9) und den äußeren Seitenpaneelprofilablauf (5.10) enthält.

13. Verfahren nach Anspruch 1, wobei das hintere Pollerprofil (6) den vorderen Vorsprung des hinteren Pollerprofils (6.1), die vordere Ausbuchtung des hinteren Pollerprofils (6.2), die hintere Pollerprofil-Schweißfase (6.3), die mittlere Zuführung des hinteren Pollerprofils (6.4), die vordere Einbuchtung der hinteren Pollerverstärkung (6.5), die vordere Einbuchtung der hinteren Pollerverstärkung (6.6), die äußere Zuführung des hinteren Pollerprofils (6.7), die innere Zuführung des hinteren Pollerprofils (6.8), den Zubehör-Befestigungsansatz (6.9) und den Vorsprung für die Türaufnahme (6.10) enthält.

## Revendications

1. Procédé d'assemblage d'une cuve à-benne basculante (2) d'un camion à benne basculante en forme de caisson (1), qui garantit qu'un profilé de bollard avant (4), des profilés de panneaux latéraux (5) et un profilé de bollard arrière (6) qui constituent la cuve-à-benne basculante (2) du camion à benne basculante en forme de caisson (1) sont engagés de manière à se compléter géométriquement les uns les autres et sont combinés par un procédé de soudage, ledit procédé comprenant :
• Le fait de garantir que le profilé de bollard avant (4) et un profilé de panneau latéral (5) soient combinés :
o une saillie de panneau latéral de profilé de bollard avant (4.2) étant positionnée dans une gorge avant de profilé de panneau latéral (5.2),
o une saillie avant de profilé de panneau latéral (5.1) étant positionnée dans une gorge de panneau latéral de profilé de bollard avant (4.3),
∘ un chanfrein de soudage avant de profilé de panneau latéral (5.6) étant soudé ensemble avec un chanfrein de soudage de profilé de bollard avant (4.1) ;
• Le fait de garantir qu'un profilé de panneau latéral (5) soit combiné avec un autre profilé de panneau latéral (5) :
∘ une saillie avant de profilé de panneau latéral (5.1) étant positionnée dans une gorge arrière de profilé de panneau latéral (5.4),
∘ une saillie arrière de profilé de panneau latéral (5.3) étant positionnée dans une gorge avant de profilé de panneau latéral (5.2),
∘ un chanfrein de soudage avant de profilé de panneau latéral (5.6) étant soudé ensemble avec un chanfrein de soudage arrière de profilé de panneau latéral (5.5) ;
• Le fait de garantir qu'un profilé de panneau latéral (5) et le profilé de bollard arrière (6) soient combinés ;
∘ une saillie arrière de profilé de panneau latéral (5.3) étant positionnée dans une gorge avant de profilé de bollard arrière (6.2),
∘ une saillie avant de profilé de bollard arrière (6.1) étant positionnée dans une gorge arrière de profilé de panneau latéral (5.4),
∘ un chanfrein de soudage de profilé de bollard arrière (6.3) qui est soudé ensemble avec un chanfrein de soudage arrière de profilé de panneau latéral (5.5).

2. Procédé selon la revendication 1, ladite saillie de panneau latéral de profilé de bollard avant (4.2) étant de forme mâle, et ladite gorge avant de profilé de panneau latéral (5.2) étant de forme femelle.

3. Procédé selon la revendication 1, ladite saillie avant de profilé de panneau latéral (5.1) étant de forme mâle, et ladite gorge de panneau latéral de profilé de bollard avant (4.3) étant de forme femelle.

4. Procédé selon la revendication 1, ladite saillie avant de profilé de panneau latéral (5.1) étant de forme mâle, et ladite gorge arrière de profilé de panneau latéral (5.4) étant de forme femelle.

5. Procédé selon la revendication 1, ladite saillie arrière de profilé de panneau latéral (5.3) étant de forme mâle, et ladite gorge avant de profilé de panneau latéral (5.2) étant de forme femelle.

6. Procédé selon la revendication 1, ladite saillie arrière de profilé de panneau latéral (5.3) étant de forme mâle, et ladite gorge avant de profilé de bollard arrière (6.2) étant de forme femelle.

7. Procédé selon la revendication 1, ladite saillie avant de profilé de bollard arrière (6.1) étant de forme mâle, et ladite gorge arrière de profilé de panneau latéral (5.4) étant de forme femelle.

8. Procédé selon la revendication 1 :
• L'évidement avant de renfort de bollard arrière (6.5), qui est combiné au renfort interne de bollard arrière (7),
• L'évidement arrière de renfort de bollard arrière (6.6), qui est combiné au renfort interne de bollard arrière (7),
garantissant que le profilé de bollard arrière (6) et le renfort interne de bollard arrière (7) soient combinés.

9. Procédé selon la revendication 1, la décharge externe de profilé de panneau latéral (5.10), positionnée à l'extérieur du profilé de panneau latéral (5), garantissant que le poids est réduit en vidant une section.

10. Procédé selon la revendication 1, le bossage de montage d'accessoires (6.9) étant utilisé comme roulement mâle lors de l'installation des pièces accessoires fixées sur la porte arrière, et utilisé comme élément inférieur du profilé de bollard arrière (6).

11. Procédé selon la revendication 1, ledit profilé de bollard avant (4) contenant le chanfrein de soudage de profilé de bollard avant (4.1), la saillie de panneau latéral de profilé de bollard avant (4.2) et la gorge de panneau latéral de profilé de bollard avant (4.3).

12. Procédé selon la revendication 1, ledit profilé de panneau latéral (5) contenant la saillie avant (5.1), la gorge avant de profilé de panneau latéral (5.2), la saillie arrière de profilé de panneau latéral (5.3), la gorge arrière de profilé de panneau latéral (5.4), le chanfrein de soudage arrière de profilé de panneau latéral (5.5), le chanfrein de soudage avant (5.6), le chargeur central de profilé de panneau latéral (5.7), le chargeur interne de profilé de panneau latéral (5.8), le chargeur externe de profilé de panneau latéral (5.9), et le chargeur externe de profilé de panneau latéral (5.10).

13. Procédé selon la revendication 1, ledit profilé de bollard arrière (6) contenant la saillie avant de profilé de bollard arrière (6.1), la gorge avant de profilé de bollard arrière (6.2), le chanfrein de soudage de profilé de bollard arrière (6.3), le chargeur central de profilé de bollard arrière (6.4), l'évidement avant de renfort de bollard arrière (6.5), l'évidement avant de renfort de bollard arrière (6.6), le chargeur externe de profilé de bollard arrière (6.7), le chargeur interne de profilé de bollard arrière (6.8), le bossage de montage d'accessoires (6.9) et la saillie de siège de porte (6.10).
